# FASCICULE DE BREVET EUROPEEN

(11) **EP 0 733 558 B1**
(45) Date de publication et mention de la délivrance du brevet: **04.11.1998**
(21) Numéro de dépôt: 96400584.7
(22) Date de dépôt: 20.03.1996
(51) Int. Cl.: B65D 39/00, B65D 39/04, B62D 25/24, C09J 5/08, C08J 9/10

(54) **Bouchon d'obturation d'une ouverture quelconque et procédé de fabrication de ce bouchon**
Dichtungsstopfen für eine Oeffnung und Verfahren zu seiner Herstellung
Sealing plug for an opening and process for manufacturing same

(30) Priorité: 21.03.1995 FR 9503284
(43) Date de publication de la demande: 25.09.1996
(73) Titulaire: RAPID S.A., F-75017 Paris (FR)
(72) Inventeur: Pierrot, Jean-Michel, 27170 Grosley sur Risle (FR); Leon, Jean-Pierre, 78800 Houilles (FR); Vigoroux, Philippe, 78700 Conflans Sainte Honorine (FR)
(74) Mandataire: Beauchamps, Georges

(56) Documents cités:
- EP-A- 0 051 523
- WO-A-88/03115
- DE-A- 3 837 530
- FR-A- 2 105 169
- FR-A- 2 250 684
- US-A- 3 504 817
- US-A- 4 952 609
- US-A- 4 988 467
- US-A- 5 230 583
- PATENT ABSTRACTS OF JAPAN vol. 15, no. 328 (C-0860), 21 Août 1991 & JP-A-89 262508 (HITACHI CHEM CO LTD), 28 Mai 1991,
- PATENT ABSTRACTS OF JAPAN vol. 11, no. 159 (C-423), 22 Mai 1987 & JP-A-85 128233 (TORAY IND. INC.), 18 Décembre 1986,
- PATENT ABSTRACTS OF JAPAN vol. 5, no. 4 (C-038), 13 Janvier 1981 & JP-A-79 039010 (NITTO ELECTRIC IND CO LTD), 11 Octobre 1980,

## Description

La présente invention a essentiellement pour objet un bouchon d'obturation d'une ouverture quelconque.

Elle vise également un procédé de fabrication possible d'un tel bouchon.

Il a déjà été proposé des bouchons pour obturer des ouvertures sur un élément quelconque, tel que par exemple une plaque métallique.

Ces bouchons peuvent comporter un cordon de colle thermofusible. Ainsi, une fois le bouchon en place sur l'ouverture et, lorsque la plaque munie d'un tel bouchon est portée à une certaine température au-delà de la température de fusion du cordon de colle, il se produira une obturation de l'ouverture par collage du bouchon sur celle-ci.

Cependant, cette méthode présente des inconvénients lorsque la plaque présente par exemple des défauts de planéité, car l'obturation ainsi réalisée n'est pas étanche.

Aussi, la présente invention a pour but de remédier notamment à cet inconvénient en proposant un bouchon d'obturation qui sera parfaitement étanche en toutes circonstances et ce quelle que soit la forme du bouchon ou la forme de l'élément devant comporter ce bouchon.

A cet effet, l'invention a pour objet un bouchon d'obturation d'une ouverture quelconque et comprenant un cordon de colle thermofusible déposé sur ledit bouchon, caractérisé en ce que le cordon de colle thermofusible comprend :
(a) un mélange adhésif,
(b) un agent de réticulation,
(c) un agent d'expansion se décomposant à une température voisine de la température de réticulation du mélange adhésif (a) et
(d) des additifs de mise en oeuvre.

Suivant un aspect de l'invention, l'agent d'expansion précité est choisi dans le groupe constitué par l'azobisisobutyronitrile, l'azodicarbonamide, l'hydrazine et un dérivé d'hydrazine.

Quant au mélange adhésif, il est choisi dans le groupe constitué par un terpolymère d'éthylène/ester acrylique/anhydride maléique, un copolymère d'éthylène/ester acrylique, greffé anhydride maléique, et leurs mélanges.

Dans ce cas, l'agent de réticulation est un peroxyde.

Selon une caractéristique du bouchon de l'invention, le mélange adhésif contient entre 5 et 40% en poids d'ester acrylique par rapport au poids total du terpolymère ou du copolymère greffé, entre 0,3 et 5% en poids d'anhydride maléique par rapport au poids total du terpolymère ou du copolymère greffé, le restant étant de l'éthylène.

On préférera plus particulièrement un terpolymère ou un copolymère greffé anhydride maléique qui a un indice de fusion compris entre 2 et 400 g/10 minutes.

Selon un mode de réalisation préféré de l'invention, l'agent d'expansion est l'azodicarbonamide.

Plus particulièrement, l'agent d'expansion constitue entre 0,1 et 30% en poids du poids total du cordon de colle thermofusible.

De préférence, l'agent d'expansion constitue de 1,5 à 5% en poids du poids total du cordon de colle thermofusible.

Selon un mode de réalisation de l'invention, le bouchon est caractérisé en ce qu'il comprend une surface de dimensions supérieures à celles de l'ouverture à obturer ainsi qu'un moyen d'accrochage dans ladite ouverture, ledit cordon de colle thermofusible avec agent d'expansion incorporé étant déposé sur ladite surface et/ou sur ledit moyen d'accrochage.

Selon un autre mode de réalisation, le bouchon est constitué entièrement de la composition définie ci-dessus pour la colle thermofusible constituant le cordon de colle.

L'invention vise également un procédé de fabrication d'un bouchon répondant aux caractéristiques ci-dessus, ce procédé consistant à mouler dans le même moule par deux injections successives le bouchon puis le cordon de colle qui est moulé par injection à une température inférieure à celle provoquant l'expansion de l'agent de gonflement.

Bien entendu, le bouchon d'obturation selon cette invention pourrait être réalisé autrement que par bi-injection, sans sortir du cadre de l'invention.

Mais d'autres caractéristiques et avantages de l'invention apparaîtront mieux dans la description détaillée qui suit et se réfère aux dessins annexés donnés uniquement à titre d'exemple, et dans lesquels.

La figure 1 est une vue en élévation et coupe d'un bouchon conforme à cette invention, avant montage sur l'élément qui doit le recevoir.

La figure 2 est une vue similaire à la précédente mais montrant le bouchon en position montée sur l'élément et après fusion et expansion du cordon de colle associé au bouchon.

La figure 3 est une vue analogue à la figure 1, mais montrant une autre disposition du cordon de colle sur le bouchon.

La figure 4 est une vue en élévation et coupe du bouchon de la figure 3 en position montée dans l'orifice d'une plaque par exemple et après fusion et expansion du cordon de colle.

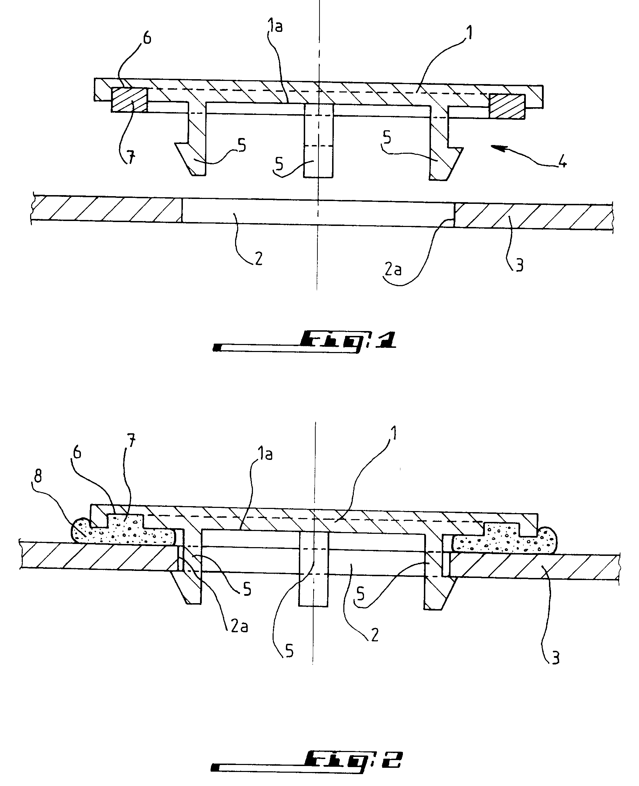

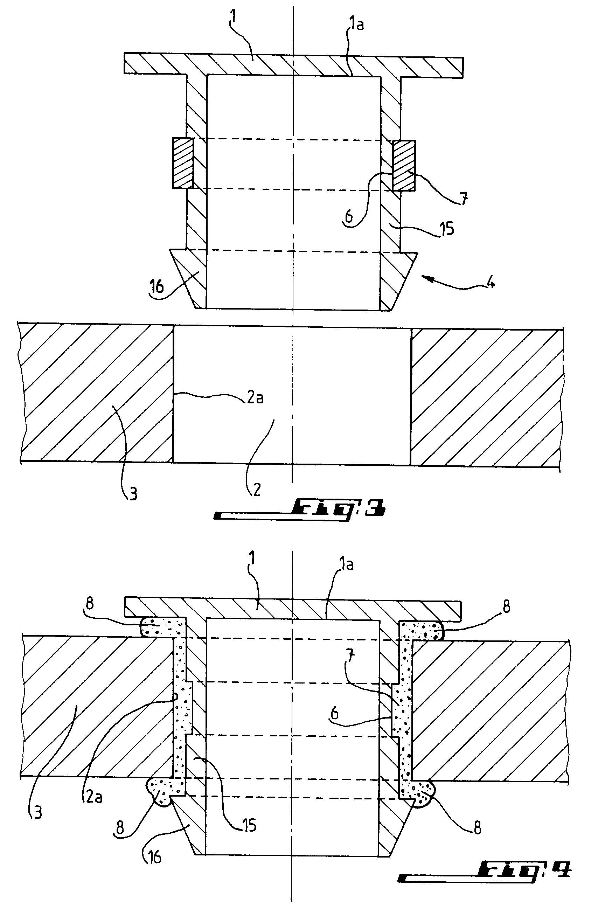

Suivant l'exemple de réalisation représenté sur les figures 1 et 2, un bouchon conforme aux principes de l'invention comprend essentiellement une surface 1, par exemple annulaire, de dimensions plus grandes que celle d'une ouverture 2 ménagée dans un élément tel que par exemple une plaque 3 qui doit recevoir le bouchon. Ce dernier comprend encore un moyen 4 d'accrochage du bouchon dans l'ouverture 2, ce moyen, suivant l'exemple de réalisation représenté, étant constitué par des pattes 5 d'accrochage du bouchon dans le bord 2a de l'ouverture 2.

Dans la face inférieure la de la surface 1 est pratiquée une rainure annulaire dans laquelle est logée un cordon de colle thermofusible 7.

Selon l'invention , le cordon de colle comprend :
(a) un mélange adhésif,
(b) un agent de réticulation,
(c) un agent d'expansion, et
(d) des additifs de mise en oeuvre.

L'agent d'expansion peut être un agent d'expansion qui se décompose à une température voisine de ou inférieure à la température de réticulation du mélange adhésif (a), l'expansion du cordon adhésif se produisant alors soit en même temps que la réticulation du mélange adhésif (a) soit après.

Dans l'invention, il est préféré que l'agent d'expansion se décompose à une température voisine de la température de réticulation du mélange adhésif (a), ce qui permet avantageusement, à une même température, d'obtenir un collage du mélange adhésif sur le substrat, empêche les coulures et le fluage par la réticulation et assure l'étanchéité par obturation de l'ouverture due au gonflement de la colle.

Ainsi, dans l'invention, par décomposition thermique de l'agent d'expansion, la résine adhésive forme une mousse qui se colle au support sans apport d'adhésif complémentaire.

L'agent d'expansion dans le cadre de l'invention est choisi dans le groupe constitué par l'azobisisobutyronitrile, l'azodicarbonamide, l'hydrazine ou un dérivé d'hydrazine. Cependant, l'agent d'expansion préféré est l'azodicarbonamide.

L'azodicarbonamide est avantageusement utilisé avec des auxiliaires de décomposition tels que l'oxyde de zinc.

La teneur en agent d'expansion sera choisie en fonction de la densité de la mousse que l'on souhaite obtenir après décomposition de l'agent d'expansion, pour le mélange adhésif.

Généralement, la quantité d'agent d'expansion constituera entre 0,1 à 30% en poids du poids total du cordon de colle (7).

Cependant les meilleurs résultats obtenus dans l'invention l'ont été avec pourcentage d'expansion entre 1,5 et 5% en poids du poids total du cordon de colle (7).

Quant au mélange adhésif selon l'invention, il est choisi dans le groupe constitué par un terpolymère d'éthylène/ester acrylique/anhydride maléique et un copolymère greffé anhydride maléique d'éthylène/ester acrylique et leurs mélanges.

C'est l'anhydride maléique qui confère les propriétés d'adhésion au mélange adhésif.

La teneur en anhydride maléique du terpolymère ou du copolymère greffé anhydride maléique variera entre 0,3 et 5% en poids du poids total du mélange adhésif.

En dessous de 0,3% en poids d'anhydride maléique, l'adhésion n'est plus suffisante.

En revanche au-delà de 5% en poids d'anhydride maléique, la résistance à l'humidité diminue très fortement.

La teneur en comonomère ester acrylique du terpolymère ou du copolymère greffé anhydride maléique constituant le mélange adhésif de l'invention est comprise entre 5% en poids et 40% en poids du poids total du mélange adhésif.

En dessous de 5% en poids d'ester acrylique, le terpolymère ou le copolymère greffé de l'invention a le comportement du polyéthylène. L'avantage de l'introduction d'un ester acrylique n'est donc pas obtenu.

Au delà de 40% d'ester acrylique, le terpolymère ou le copolymère greffé de l'invention est trop souple.

Dans les deux cas, l'effet positif de la combinaison de l'éthylène et de l'ester acrylique n'est pas obtenu.

De nombreux esters acryliques peuvent être utilisés pour réaliser l'invention mais ceux préférés sont le méthyl acrylate, l'éthyl acrylate, le n-butyl acrylate, l'isobutyl acrylate et 2-éthyl hexyl acrylate.

Parmi ceux-ci, le n-butyl acrylate s'est révélé particulièrement adapté.

Bien entendu, le restant du mélange adhésif est constitué par l'éthylène.

Le terpolymère ou le copolymère greffé anhydride maléique, éthylénique, de l'invention, a des caractéristiques de flexibilité et de fluidité permettant d'obtenir une mousse souple et un composé fluide moulable et extrudable.

Toujours selon l'invention, l'indice de fusion de ce terpolymère ou copolymère greffé anhydride maléique, éthylénique, constituant le mélange adhésif (a) a un indice de fusion compris entre 2 et 400 g/10 mn inclus.

En effet, il faut augmenter fortement le taux de réticulation pour obtenir une tenue en température du cordon de colle (7), ce qui est accompagné par une perte de souplesse et la formation d'une mousse peu homogène, lorsque l'indice de fusion du terpolymère ou du copolymère greffé anhydride maléique éthylénique de l'invention est supérieur à 400.

Egalement, lorsque l'indice de fusion du mélange adhésif (a) est inférieur à 2, il peut y avoir auto-échauffement et dans les cas extrêmes, décomposition de l'agent d'expansion.

La formulation du cordon de colle thermofusible (7) indiquée ci-dessus permet un moulage du cordon à une température suffisamment basse pour éviter de déclencher l'expansion, l'azodicarbonamide se décomposant et donc provoquant l'expansion à une température comprise entre 120°C et 200°C.

On observera que l'anhydride maléique peut être remplacé par une fonction époxy.

On notera également que l'ester acrylique pourra également être remplacé par de l'acétate de vinyle.

Il est également possible d'incorporer au cordon de colle 7 des agents anti U.V. tels que du phényl salicylate et/ou des agents ignifugeants tels que l'alumine hydratée et du tétrabromobenzène.

Typiquement, comme on le verra dans les exemples, le cordon de colle thermofusible 7 de l'invention comprend de l'acide stéarique comme aide au compoundage et à l'injection.

En se reportant maintenant à la figure 2, on voit que le cordon de colle 7 a subi une expansion visible en 8 après chauffage à une température suffisante pour permettre ladite expansion qui est susceptible, comme on le voit bien sur la figure, de remplir intimement tous les interstices entre la plaque 3 et la surface 1 du bouchon. Cette température suffisante pourra, par exemple, être celle d'une étuve de peinture dans laquelle on fait passer la plaque 3.

A cet égard, on notera que si l'azodicarbonamide est utilisé comme agent de gonflement ou d'expansion dans le cordon de colle 7, une expansion du cordon de colle sera obtenue pour des températures comprises entre environ 120°C et 200°C. De préférence, on réalisera l'expansion à une température comprise entre 120°C et 160°C, cette température étant suffisante pour provoquer la réticulation concomitante du mélange adhésif.

Le bouchon d'obturation qui vient d'être décrit pourra par exemple être fabriqué par moulage par injection de la façon suivante. On le réalisera par bi-injection de matière, c'est-à-dire plus précisément par moulage par injection dans un moule du bouchon proprement dit, puis par moulage du cordon de colle sur la face inférieure la de la surface 1 et dans la rainure 6, à une température qui sera inférieure à celle provoquant l'expansion de l'agent d'expansion incorporé au cordon de colle 7, c'est-à-dire à une température comprise entre 80°C et 140°C, de préférence entre 80°C et 120°C dans le cas de la composition pour le mélange adhésif (a) décrit ci-dessus.

En effet la température de fusion du terpolymère précité ainsi que du copolymère greffé anhydride maléique précité, constituant le mélange adhésif (a) est d'environ 70°C à 90°C.

Dans le cas dans lequel on utilise un agent d'expansion ayant une température inférieure à la température de réticulation du mélange adhésif, on réalisera d'abord l'expansion par décomposition de l'agent d'expansion puis, à une température supérieure, la réticulation du mélange adhésif (a).

On comprend donc des explications qui précèdent, et comme on le voit bien sur la figure 2, que, grâce aux dispositions selon cette invention, on obtiendra une étanchéité parfaite entre bouchon et ouverture sans que pour cela le cordon de colle 7 ne confère à l'assemblage un aspect inesthétique.

On se reportera maintenant au mode de réalisation illustré par les figures 3 et 4, dans lequel on a utilisé les mêmes repères pour désigner les éléments communs.

Ici, la rainure 6 recevant le cordon de colle 7 comprenant l'agent d'expansion est ménagée dans un élément annulaire 15 comportant une extrémité d'accrochage 16.

Et, comme on le voit bien sur la figure 4, le cordon de colle 7 s'expand, grâce à l'agent d'expansion incorporé, aussi bien entre l'élément annulaire d'accrochage 15 et le bord 2a de l'ouverture 2 qu'entre la plaque 3 et la face inférieure la de la surface 5 qui, ici ne comporte pas de cordon de colle.

Cela étant, on pourrait aussi prévoir, dans le cas des figures 3 et 4 un cordon de colle déposé sur ou associé à la surface 1 du bouchon d'obturation, bien que cela ne soit pas représenté.

Des exemples de formulation chimique du joint de colle thermofusible 7 selon l'invention seront maintenant décrits. Ces exemples sont donnés uniquement à titre d'illustration et ne doivent en aucun cas être considérés comme limitatifs de l'invention.

Dans ces exemples, tous les pourcentages sont en poids sauf s'il en est autrement spécifié.

### Exemple 1

La formulation du joint de colle thermofusible dans cette invention était la suivante :

| | |
|---|---|
| Terpolymère éthylène/20% acrylate d'éthyle /3% anhydride maléique | 50% en poids |
| Terpolymère éthylène/20% acrylate d'éthyle /3% anhydride maléique | 41,9% en poids |
| Bis(2-tert-butylperoxy-isopropyl)benzène | 3,6% en poids |
| Azodicarbonamide | 2% en poids |
| ZnO | 2% en poids |
| Acide stéarique | 0,5% en poids |

Le premier terpolymère a un indice de fusion de 20 g/10 mn, et un point de fusion de 80°C.

Le second terpolymère a un indice de fusion de 70 g/10 mn et un point de fusion de 76°C.

Leur combinaison permet d'obtenir un bon compromis réticulation/souplesse et fluidité pour l'injection de la formulation de colle.

On a réalisé une expansion et une réticulation simultanée de ce joint de colle. On a obtenu une mousse ayant une densité d'environ 0,5.

La fluidité de cette formulation était appropriée pour la fabrication d'un obturateur dans l'invention par bi-injection comme décrit ci-dessus.

### Exemple 2

La formulation suivante a été utilisée dans cet exemple :

| | |
|---|---|
| Terpolymère éthylène/20% acrylate d'éthyle/3% anhydride maléique | 50% en poids |
| Terpolymère éthylène/20% acrylate d'éthyle/3% anhydride maléique | 40,4% en poids |
| Bis (2-tert-butylperoxy-isopropyl) benzène | 3,6% en poids |
| Azodicarbonamide | 3,5% en poids |
| ZnO | 2% en poids |
| Acide stéarique | 0,5% en poids |

Comme dans le cas de l'exemple 1, le premier terpolymère a un indice de fusion de 20g/10mn et en un point de fusion de 80°C et le second terpolymère a un indice de fusion de 70g/10 mn et un point de fusion de 76°C.

La formulation a une fluidité appropriée pour la fabrication d'un bouchon selon l'invention par bi-injection comme décrit ci-dessus.

L'expansion a été réalisée de façon concomitante à la réticulation du mélange adhésif de cette formulation.

La mousse obtenue après cette expansion-réticulation a une densité d'environ 0,20.

Dans les deux exemples précédents, on a donc réalisé suivant l'invention un bouchon d'obturation assurant en toutes circonstances, et quelques soient les défauts de planéité de la plaque 3 et du bouchon d'obturation, une étanchéité parfaite entre le bouchon et ladite plaque grâce à l'utilisation du joint de colle thermofusible 7 comprenant le mélange adhésif et un agent d'expansion incorporé.

On pourrait parfaitement, sans sortir du cadre de l'invention, prévoir, pour le cordon de colle avec son agent d'expansion incorporé un emplacement sur le bouchon autre que celui représenté sur les figures, cela étant notamment fonction des moyens particuliers d'accrochage utilisés pour le bouchon.

Egalement, la formulation qui a été décrite auparavant pour utilisation dans le joint de colle (7), pourra être utilisée pour former le bouchon d'obturation lui-même.

Ainsi un bouchon de l'invention pourra être constitué seulement d'une composition comprenant :
a) un mélange adhésif,
b) un agent de réticulation
c) un agent d'expansion se décomposant à une température voisine de la température de réticulation du mélange adhésif (a),
d) des additifs de mise en oeuvre.

Evidemment comme dit précédemment, l'agent d'expansion est de préférence choisi dans le groupe constitué par l'azobisisobutyronitrile, l'azodicarbonamide, l'hydrazine et un dérivé de l'hydrazine.

Quant au mélange adhésif, il est également dans ce cas de préférence choisi le groupe constitué par un terpolymère d'éthylène/ester acrylique/anhydride maléique, un copolymère greffé anhydride maléique d'éthylène/ester acrylique et leurs mélanges.

L'agent de réticulation préféré dans cette variante de l'invention est un peroxyde.

Comme dans le cas du cordon de colle thermofusible (7) décrit précédemment, le mélange adhésif contenu dans la composition du bouchon contient entre 5 et 40% en poids d'ester acrylique, du poids total du terpolymère ou du copolymère greffé, entre 0,3 et 5% en poids d'anhydride maléique, du poids total du terpolymère ou du copolymère greffé, le restant étant de l'éthylène et préférablement contient entre 5 et 40% en poids d'ester acrylique, du poids total du terpolymère ou du copolymère greffé, entre 0,3 et 5% en poids d'anhydride maléique, du poids total du terpolymère ou du copolymère greffé, le restant étant de l'éthylène.

L'agent d'expansion utilisé de préférence ici est l'azodicarbonamide et constitue entre 0,1 et 30% en poids du poids total de la composition du bouchon (7). Plus préférablement l'agent d'expansion constitue entre 1,5 et 5% en poids du poids total du bouchon.

C'est dire que l'invention n'est nullement limitée aux modes de réalisation décrits et illustrés qui n'ont été donnés qu'à titre d'exemple.

## Revendications

1. Bouchon d'obturation d'une ouverture quelconque (2) et comprenant un cordon de colle thermofusible (7) déposé sur ledit bouchon, caractérisé en ce que le cordon de colle thermofusible (7) comprend :
(a) un mélange adhésif
(b) un agent de réticulation
(c) un agent d'expansion se décomposant à une température voisine de la température de réticulation du mélange adhésif (a),
(d) des additifs de mise en oeuvre.

2. Bouchon selon la revendication 1, caractérisé en ce que l'agent d'expansion précité est choisi dans le groupe constitué par l'azobisisobutyronitrile, l'azodicarbonamide, l'hydrazine et un dérivé de l'hydrazine.

3. Bouchon selon la revendication 1 ou 2 caractérisé en ce que le mélange adhésif est choisi dans le groupe constitué par un terpolymère d'éthylène/ester acrylique/anhydride maléique, un copolymère greffé anhydride maléique d'éthylène/ester acrylique et leurs mélanges.

4. Bouchon selon la revendication 3 caractérisé en ce que l'agent de réticulation est un peroxyde.

5. Bouchon selon la revendication 3 ou 4 caractérisé en ce que le mélange adhésif contient entre 5 et 40% en poids d'ester acrylique, du poids total du terpolymère ou du copolymère greffé, entre 0,3 et 5% en poids d'anhydride maléique, du poids total du terpolymère ou du copolymère greffé, le restant étant de l'éthylène.

6. Bouchon selon l'une quelconque des revendications 3 à 5, caractérisé en ce que le terpolymère ou le copolymère greffé anhydride maléique a un indice de fusion compris entre 2 et 400 g/10 nm.

7. Bouchon selon l'une quelconque des revendications 2 à 5 caractérisé en ce que l'agent d'expansion est l'azodicarbonamide.

8. Bouchon selon l'une quelconque des revendications précédentes caractérisé en ce que l'agent d'expansion constitue entre 0,1 et 30% en poids du poids total du cordon de colle (7).

9. Bouchon selon l'une quelconque des revendications précédentes caractérisé en ce que l'agent d'expansion constitue entre 1,5 et 5% en poids du poids total du cordon de colle (7).

10. Bouchon selon l'une quelconque des revendications précédentes, caractérisé en ce qu'il comprend une surface (1) de dimension supérieures à celles de l'ouverture (2) ainsi qu'un moyen (4) d'accrochage dans ladite ouverture, ledit cordon de colle thermofusible (7) étant déposé sur ladite surface (1) et/ou ledit moyen (4) d'accrochage.

11. Procédé de fabrication d'un bouchon selon l'une quelconque des revendications précédentes, caractérisé en ce qu'il consiste à mouler dans le même moule par deux injections successives le bouchon puis le cordon de colle (7) qui est moulé par injection à une température inférieure à celle provoquant l'expansion de l'agent de gonflement.

12. Bouchon d'obturation d'une ouverture quelconque (2) caractérisé en ce qu'il est fait de la composition thermofusible telle que définie dans l'une quelconque des revendications 1 à 9 et constituant le cordon de colle (7)

## Claims

1. Plug for closing any opening (2) and comprising a bead of thermofusible glue (7) deposited onto the said plug, characterized in that the bead of thermofusible glue (7) comprises:
(a) an adhesive mixture,
(b) a cross-linking agent,
(c) an expansion agent decomposing itself at a temperature close to the temperature of cross-linking of the adhesive mixture (a),
(d) additives for practising.

2. Plug according to claim 1, characterized in that the aforesaid expansion agent is selected in the group constituted by azobisisobutyronitrile, azodicarbonamide, hydrazine and a derivative of hydrazine.

3. Plug according to claim 1 or 2, characterized in that the adhesive mixture is selected in the group constituted by a terpolymer of ethylene/acrylic ester/maleic anhydride, a polymer of ethylene/ acrylic ester grafted with maleic anhydride and their mixtures.

4. Plug according to claim 3, characterized in that the cross-linking agent is a peroxide.

5. Plug according to claim 3 or 4, characterized in that the adhesive mixture contains between 5 and 40 % by weight of acrylic ester, of the total weight of the terpolymer or of the grafted copolymer, between 0.3 and 5% by weight of maleic anhydride, of the total weight of the terpolymer or of the grafted copolymer, the remainder being ethylene.

6. Plug according to any one of claims 3 to 5, characterized in that the terpolymer or the copolymer grafted with maleic anhydride has a melt index comprised between 2 and 400 g/10 mn.

7. Plug according to any one of claims 2 to 5, characterized in that the expansion agent is azodicarbonamide.

8. Plug according to any one of the foregoing claims, characterized in that the expansion agent constitutes between 0.1 and 30% by weight of the total weight of the bead of glue (7).

9. Plug according to any one of the foregoing claims, characterized in that the expansion agent constitutes between 1.5 and 5% by weight of the total weight of the bead of glue (7).

10. Plug according to any one of the foregoing claims, characterized in that it comprises a surface (1) with dimensions greater than those of the opening (2) as well as a means (4) for hooking on into the said opening, the said bead of heat-fusible glue (7) being deposited upon the said surface (1) and/or the said hooking means (4).

11. Method of manufacture of a plug according to any one of the foregoing claims, characterized in that it consists in moulding in the same mould by two successive injections the plug and then the bead of glue (7) which is injection-moulded at a temperature lower than that causing the expansion of the swelling agent.

12. Plug for the closing of any opening (2), characterized in that it is made from the heat-fusible composition such as defined in any one of claims 1 to 9 and constituting the bead of adhesive (7).

## Patentansprüche

1. Stopfen zum Verschließen von irgendeiner Öffnung (2) mit einem auf dem besagten Stopfen aufgetragenen warmschmelzbaren Klebstoffstreifen (7), dadurch gekennzeichnet, daß der warmschmelzbare Klebstoffstreifen (7):
(a) ein klebendes Gemisch,
(b) ein Vernetzungsmittel,
(c) ein sich bei einer der Vernetzungstemperatur des klebenden Gemisches (a) benachbarten Temperatur zersetzendes Ausdehnungsmittel,
(d) Zusatzstoffe für den Einsatz
umfaßt.

2. Stopfen gemäß Anspruch 1, dadurch gekennzeichnet, daß das vorgenannte Ausdehnungsmittel in der durch Azobisisobutyronitril, Azodikarbonamid, Hydrazin oder ein Derivat von Hydrazin gebildeten Gruppe gewählt wird.

3. Stopfen nach Anspruch 1 oder 2, dadurch gekennzeichnet, daß das klebende Gemisch in der durch ein Terpolymer von Ethylen/Acrylester/Maleinanhydrid, ein mit Maleinanhydrid gepfropftes Copolymer von Ethylen/Acrylester und deren Mischungen gebildeten Gruppe gewählt wird.

4. Stopfen nach Anspruch 3, dadurch gekennzeichnet, daß das Vernetzungsmittel ein Peroxid ist.

5. Stopfen gemäß Anspruch 3 oder 4, dadurch gekennzeichnet, daß das klebende Gemisch zwischen 5 und 40 Gewichtsprozent von Acrylester des Gesamtgewichtes des Terpolymers oder des Pfropfcopolymers, zwischen 0,3 und 5 Gewichtsprozent von Maleinanhydrid des Gesamtgewichtes des Terpolymers oder des Pfropfcopolymers enthält, wobei der Rest Ethylen ist.

6. Stopfen nach irgendeinem der Ansprüche 3 bis 5, dadurch gekennzeichnet, daß das Terpolymer oder das mit Maleinanhydrid gepfropftes Copolymer einen zwischen 2 und 400 g/10 mn liegenden Schmelzindex hat.

7. Stopfen nach irgendeinem der Ansprüche 2 bis 5, dadurch gekennzeichnet, daß das Ausdehnungsmittel Azodikarbonamid ist.

8. Stopfen gemäß irgendeinem der vorangehenden Ansprüche, dadurch gekennzeichnet, daß das Ausdehnungsmittel zwischen 0,1 und 30 Gewichtsprozent des Gesamtgewichtes des Klebstoffstreifens (7) bildet.

9. Stopfen nach irgendeinem der vorangehenden Ansprüche, dadurch gekennzeichnet, daß das Ausdehnungsmittel zwischen 1,5 und 5 Gewichtsprozent des Gesamtgewichtes des Klebstoffstreifens (7) bildet.

10. Stopfen nach irgendeinem der vorangehenden Ansprüche, dadurch gekennzeichnet, daß er eine Fläche (1) mit Abmessungen größer als diejenigen der Öffnung (2), sowie ein Mittel (4) zum Anhaken in der besagten Öffnung aufweist, wobei der warmschmelzbare Klebstoffstreifen (7) auf der besagten Fläche (1) und/oder dem besagten Anhakungsmittel (4) aufgetragen wird.

11. Verfahren zur Herstellung eines Stopfens gemäß irgendeinem der vorangehenden Ansprüche, dadurch gekennzeichnet, daß es darin besteht, den Stopfen in derselben Gießform durch zwei aufeinanderfolgenden Einspritzungen und dann den Klebstoffstreifen (7), der durch Spritzguß bei einer niedrigeren Temperatur als diejenige, die die Ausdehnung des Quellmittels verursacht, zu formen.

12. Stopfen zum Verschließen irgendeiner Öffnung (2), dadurch gekennzeichnet, daß er aus der den Klebstoffstreifen (7) bildenden warmschmelzbaren Zusammensetzung, wie in irgendeinem der Ansprüche 1 bis 9 bestimmt, besteht.
